# FASCICULE DE BREVET EUROPEEN

(11) **EP 2 454 525 B1**
(45) Date de publication et mention de la délivrance du brevet: **24.08.2016**
(21) Numéro de dépôt: 10735030.8
(22) Date de dépôt: 30.06.2010
(51) Int. Cl.: F23C 99/00, F23C 10/00, F23C 10/02

(54) **PROCEDE DE COMBUSTION EN BOUCLE CHIMIQUE AVEC CONTROLE INDEPENDANT DE LA CIRCULATION DES SOLIDES**
VERFAHREN FÜR CHEMICAL-LOOPING-COMBUSTION MIT UNABHÄNGIGER STEUERUNG DER FESTSTOFFZIRKULATION
METHOD FOR CHEMICAL LOOPING COMBUSTION WITH INDEPENDENT CONTROL OF THE CIRCULATION OF SOLIDS

(30) Priorité: 16.07.2009 FR 0903502
(43) Date de publication de la demande: 23.05.2012
(73) Titulaire: IFP Énergies nouvelles, 92852 Rueil-Malmaison Cedex (FR); TOTAL RAFFINAGE CHIMIE, 92400 Courbevoie (FR)
(72) Inventeur: GAUTHIER, Thierry, 69530 Brignais (FR); HOTEIT, Ali, 75012 Paris (FR); FORRET, Ann, 69420 Longes (FR)
(86) Numéro de dépôt international: PCT/FR2010/000476
(87) Numéro de publication internationale: WO 2011/007055

(56) Documents cités:
- FR-A1- 2 895 413
- JP-A- 10 300 020
- JP-A- 11 148 609
- US-A- 3 969 089

## Description

### DOMAINE DE L'INVENTION

L'invention concerne le domaine de la combustion en boucle chimique. Dans la suite du texte, on entend par procédé de combustion en boucle chimique CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice (« masse active » ou « porteur d'oxygène »), est oxydée et le réacteur de réduction est le réacteur dans lequel la masse oxydo-réductrice est réduite. Lors de la réduction de la masse oxydo-réductrice le combustible peut être soit totalement oxydé, produisant du CO2 et H2O, soit partiellement oxydé, produisant du gaz de synthèse CO et H2.

L'oxydation des masses actives peut se faire à l'air, ou en présence d'un gaz pouvant céder de l'oxygène dans les conditions du procédé, tel que par exemple la vapeur d'eau. Dans ce cas, l'oxydation des masses actives permet de produire un effluent gazeux riche en hydrogène.

De préférence, les masses actives sont des oxydes métalliques.

Plus particulièrement, l'invention concerne un procédé amélioré de combustion en boucle chimique d'une charge hydrocarbonée avec contrôle indépendant de la circulation des particules solides entre les zones réactionnelles, au moyen d'une ou plusieurs vannes non mécaniques de type vanne en L.

### LISTE DES FIGURES

La figure 1 représente une vue en coupe d'une vanne non mécanique dite « vanne en L », comme décrite par Knowlton dans Knowlton, T. M., "Standpipes and Nonmechanical Valves", Handbook of Fluidization and Fluid-Particle Systems, Wen-Ching Yang, editor, pp. 571-597. Marcel Dekker, Inc. New York, 2003.
Les figures 2 et 3 représentent également des vues en coupe de la même vanne en L incluant une représentation schématique des flux de solides et de gaz, avec flux de gaz vers le bas (A) et flux de gaz vers le haut (B).
La figure 4 représente une vue schématique d'un procédé en lit circulant utilisant les vannes en L (art antérieur).
La figure 5 représente une vue schématique d'un procédé de combustion en chaudière en lit circulant (art antérieur).
La figure 6 représente une vue schématique d'un procédé de craquage catalytique de type FCC (Fluid Catalytic Cracking), dans lequel des vannes à pelle (« slide valve ») ou à bouchon (« plug valve ») sont utilisées pour contrôler la circulation entre les différentes enceintes (art antérieur).
La figure 7 représente une vue schématique d'un procédé de combustion en boucle chimique de type Chemical Looping (CLC) (art antérieur).
La figure 8 représente une vue schématique du procédé de combustion en boucle chimique avec contrôle de la circulation des solides selon l'invention, dans lequel le dispositif comprend une conduite ascendante de transport des particules entre les zones réactionnelles (« lift » de transport, variante 1).
La figure 9 représente une vue schématique du procédé de combustion en boucle chimique avec contrôle de la circulation des solides selon l'invention, sans conduite ascendante de transport des particules entre les zones réactionnelles (variante 2).
La figure 10 représente une vue schématique du procédé de combustion en boucle chimique selon l'invention mettant en oeuvre une régulation du gaz injecté dans les vannes en L (variante 3).
La figure 11 représente une vue schématique de la maquette décrite dans l'exemple.
La figure 12 est un graphique représentant la perte de charge dans une canalisation ascendante de transport de type « lift » en fonction du débit de solide circulant.
La figure 13 est un graphique représentant la relation entre le débit d'aération dans chaque vanne en L et le débit de solide circulant dans l'installation.

### EXAMEN DE L'ART ANTERIEUR

Les vannes non mécaniques permettent, grâce à l'injection de gaz en amont d'un coude, de faire circuler les particules dans une canalisation. Ce type d'équipement est bien connu et décrit dans la littérature (Knowlton, T. M., "Standpipes and Nonmechanical Valves", Handbook of Fluidization and Fluid-Particle Systems, Wen-Ching Yang, editor, pp. 571-597. Marcel Dekker, Inc. New York, 2003.).

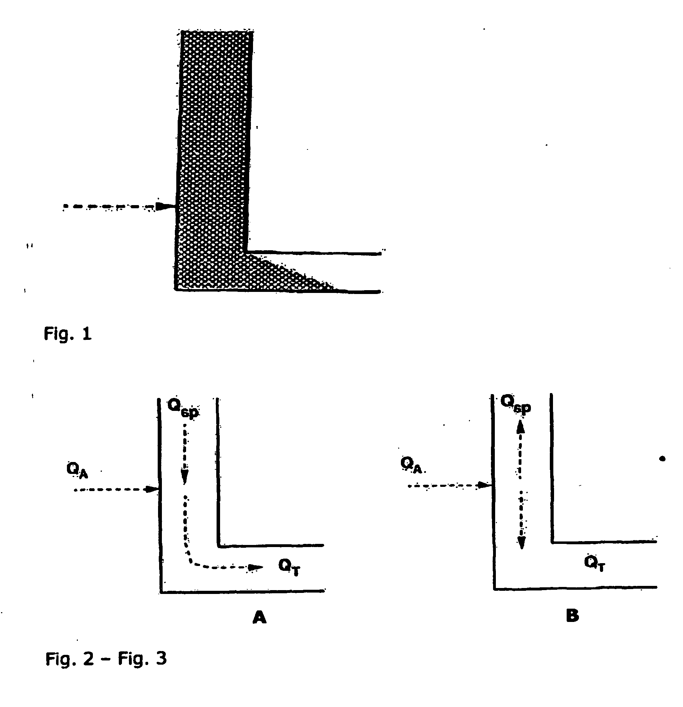

Ainsi sur la figure 1, une vanne en L est décrite. La vanne en L est constituée d'une canalisation verticale équipée à sa base d'un coude à 90°. Si la canalisation verticale est remplie de particules, l'injection d'un gaz, positionnée en amont de ce coude à proximité du changement de direction permet de favoriser la circulation de particules dans la canalisation. En fonction des conditions de pression imposées aux bornes du système, une partie du gaz injecté descend dans la conduite, passe le coude et favorise le transport des particules (Figures 2 et 3, configurations A et B). Une partie du gaz injecté peut également remonter à contre courant de l'écoulement des particules (Figure 3, configuration B). La proportion de gaz injecté qui remonte s'ajuste en fonction des conditions de pression aux bornes de la vanne.

Les vannes en L permettent de contrôler la circulation de solide lorsque l'écoulement dans la canalisation verticale en amont du point d'injection de gaz est non fluidisé (c'est à dire que la différence de vitesse entre l'écoulement du gaz et l'écoulement des particules reste inférieur à la vitesse minimale de fluidisation des particules aux conditions). Ces vannes sont particulièrement appropriées à la mise en oeuvre de particules du groupe B de la classification de Geldart, qui possèdent une vitesse minimum de fluidisation suffisamment élevée pour permettre un écoulement de particules élevé.

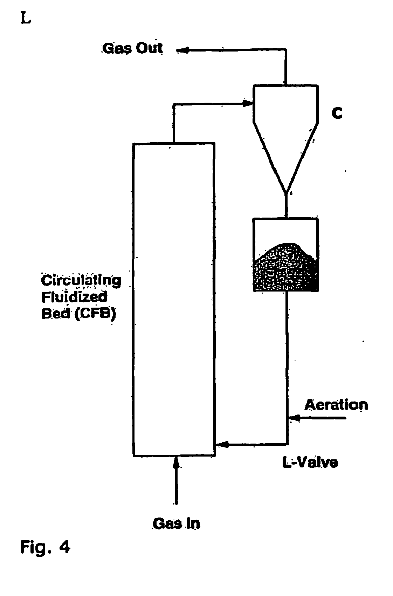

Knowlton (Knowlton, T. M., "Standpipes and Nonmechanical Valves", Handbook of Fluidization and Fluid-Particle Systems, Wen-Ching Yang, editor, pp. 571-597. Marcel Dekker, Inc. New York, 2003) décrit un système de lit circulant utilisant les vannes en L (Figure 4). Un lit fluidisé circulant (CFB), dans lequel du gaz injecté par le bas (« Gas In ») permet de transporter les particules, entraîne le gaz et les particules jusqu'à un cyclone C. Le gaz exempt de particules sort du cyclone par une conduite (« Gas Out ») et les particules séparées sont réintroduites dans le lit circulant par une vanne en L (« L-Valve »). Un tel système permet de découpler la circulation interne de solide à l'intérieur de la boucle de l'écoulement du gaz dans le lit circulant, la pression disponible pour le transport des particules dans le lit circulant variant en fonction de la quantité de gaz d'aération injectée (« aération ») dans la vanne en L (qui permet de faire varier la récupération de pression dans la partie verticale de la vanne en L).

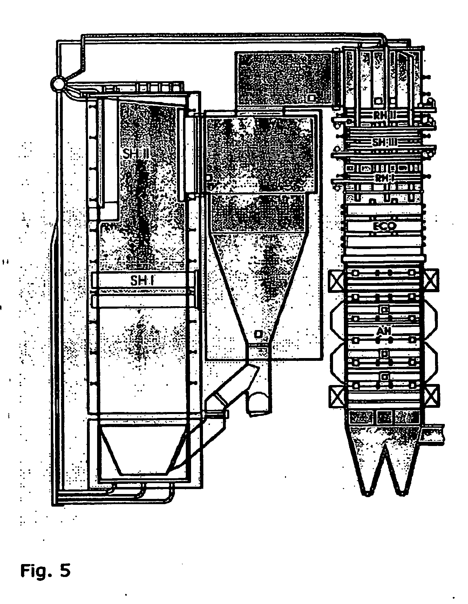

Dans les procédés industriels classiques de combustion en lit fluidisé circulant cependant, les technologies mises en oeuvre ne permettent pas de contrôler indépendamment la circulation interne de solide dans la boucle. Sur la Figure 5 (Nowak et al., IFSA 2008, Industrial Fluidization South Africa, pp.25-33. Edited by T. Hadley and P.Smit Johannesburg: South Africa Institute of Mining and Metallurgy, 2008), une chaudière en lit circulant est représentée. L'air de combustion est introduit à la base du lit circulant et transporte les particules de charbon et de sable jusqu'à un cyclone. Les particules sont ensuite recyclées dans le lit fluidisé circulant à travers une jambe de retour. La jambe de retour est dimensionnée pour favoriser le recycle de solide mais ne permet pas le contrôle de la circulation de solides. Elle n'est pas équipée de vannes en L. Parfois, des siphons sont positionnés sur cette jambe de retour pour éviter les remontées de gaz dans la jambe de retour. Néanmoins, dans ces systèmes, la circulation de solide à l'intérieur de la boucle est entièrement assujettie à la quantité d'air de combustion introduite dans le lit circulant.

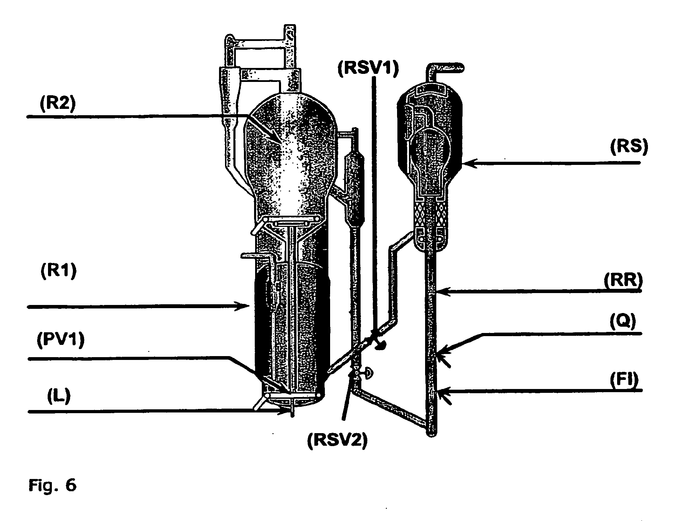

Il existe d'autres moyens de contrôler la circulation des solides. Lorsque les conditions le permettent, on peut utiliser des vannes mécaniques sur solides. Ainsi, dans le procédé de craquage catalytique en lit fluidisé (Fluid Catalytic Craking : FCC), procédé opérant à des températures inférieures à 800-850°C, des vannes à pelle (« slide valve ») ou à bouchon (« plug valve ») sont utilisées pour contrôler la circulation entre les différentes enceintes (Figure 6, Gauthier, IFSA 2008, Industrial Fluidization South Africa, pp.35-87. Edited by T. Hadley and P.Smit Johannesburg: South Africa Institute of Mining and Metallurgy, 2008).

Sur la figure 6, les éléments suivants permettant la mise en oeuvre du procédé FCC sont représentés :
R1 : régénérateur n°1
R2 : régénérateur n°2
PV1 : vanne mécanique à bouchon (plug valve n°1)
RSV1: vanne mécanique à pelle n°1 (slide valve n°1)
RSV2: vanne mécanique à pelle n°1 (slide valve n°2)
L: conduite ascendante de transport (lift)
FI : injection de charge (feed injection)
Q = quench
RR : réacteur riser
RS : réacteur stripper

Ces vannes opèrent sur des écoulements fluidisés et ont la caractéristique de contrôler l'écoulement en modifiant la section de passage, la perte de charge de ces vannes restant en général constante et dépendant uniquement des conditions de fluidisation des particules en amont de la vanne. Ces vannes sont particulièrement adaptées à l'opération sur des particules du groupe A de la classification de Geldart. Malheureusement, l'opération de ces vannes sur des particules du groupe B est plus délicate. En effet, il est impossible de maintenir les particules du groupe B fluidisées sans former des bulles de gaz de grande taille qui perturbent les écoulements. De plus, les parties mobiles de ces vannes exposées à l'écoulement ne peuvent être exposées à de très hautes températures (>900°C).

La combustion par boucle chimique est une technique permettant d'effectuer la combustion partielle ou totale de charges hydrocarbonées gazeuses, liquides ou solides, par contact avec une masse active comme par exemple un oxyde métallique à haute température. L'oxyde métallique cède alors une partie de l'oxygène qu'il renferme, qui participe à la combustion des hydrocarbures. Il n'est donc plus nécessaire de mettre l'hydrocarbure en contact avec de l'air, comme dans les procédés classiques. De ce fait, les fumées de combustion contiennent majoritairement des oxydes de carbone, de l'eau et éventuellement de l'hydrogène, non dilués par l'azote de l'air. Il est donc possible ainsi de produire des fumées exemptes majoritairement d'azote et contenant des teneurs en CO2 élevées (>90%vol.) permettant d'envisager le captage, puis le stockage de CO2. L'oxyde métallique ayant participé à la combustion est ensuite transporté vers une autre enceinte réactionnelle où il est mis en contact avec de l'air pour être oxydé. Si les particules revenant de la zone de combustion sont exemptes de combustible, les gaz issus de cette zone réactionnelle sont majoritairement exempts de CO2 -qui n'est alors présent qu'à l'état de traces, par exemple à des concentrations inférieures à 1-2% en volume)- et consistent essentiellement en de l'air appauvri en oxygène, suite à l'oxydation des particules métalliques.

La mise en oeuvre d'un procédé de combustion par boucle chimique requiert des quantités de masses actives, par exemple d'oxydes métalliques importantes au contact du combustible. Les oxydes métalliques sont généralement contenus soit dans des particules de minerai, soit dans des particules résultant de traitements industriels (résidus de l'industrie sidérurgique ou minière, catalyseurs de l'industrie chimique ou du raffinage usagés). On peut également utiliser des matériaux synthétiques, tels que par exemple des supports d'alumine ou de silice alumine sur lesquels on aura déposé des métaux qui peuvent être oxydés (oxyde de Nickel par exemple). D'un oxyde métallique à l'autre, la quantité d'oxygène théoriquement disponible varie considérablement et peut atteindre des valeurs élevées voisines de 30%. Selon les matériaux cependant, la capacité maximale d'oxygène réellement disponible n'excède en général pas plus de 20% de l'oxygène présent. La capacité de ces matériaux à céder de l'oxygène n'excède donc au global pas plus de quelques pourcents en poids des particules et varie considérablement d'un oxyde à un autre, généralement de 0.1 à 10%, et souvent entre 0.3 à 1% poids. La mise en oeuvre en lit fluidisé est de ce fait particulièrement avantageuse pour conduire la combustion. En effet, les particules d'oxydes finement divisées circulent plus facilement dans les enceintes réactionnelles de réduction et d'oxydation, et entre ces enceintes, si l'on confère aux particules les propriétés d'un fluide (fluidisation).

La combustion par boucle chimique permet de produire de l'énergie, sous la forme de vapeur ou d'électricité par exemple. La chaleur de combustion de la charge est similaire à celle rencontrée dans la combustion classique. Celle-ci correspond à la somme des chaleurs de réduction et d'oxydation dans la boucle chimique. La répartition entre les chaleurs de réduction et d'oxydation dépend fortement des masses actives (notamment oxydes métalliques) utilisées pour conduire la combustion par boucle chimique. Dans certains cas, l'exothermicité est répartie entre l'oxydation et la réduction de la masse active. Dans d'autres cas, l'oxydation est fortement exothermique et la réduction est endothermique. Dans tous les cas, la somme des chaleurs d'oxydation et de réduction est égale à la chaleur de combustion du combustible. La chaleur est extraite par des échangeurs situés à l'intérieur, en paroi ou en appendice des enceintes de combustion et / ou d'oxydation, sur les lignes de fumées, ou sur les lignes de transfert d'oxydes métalliques.

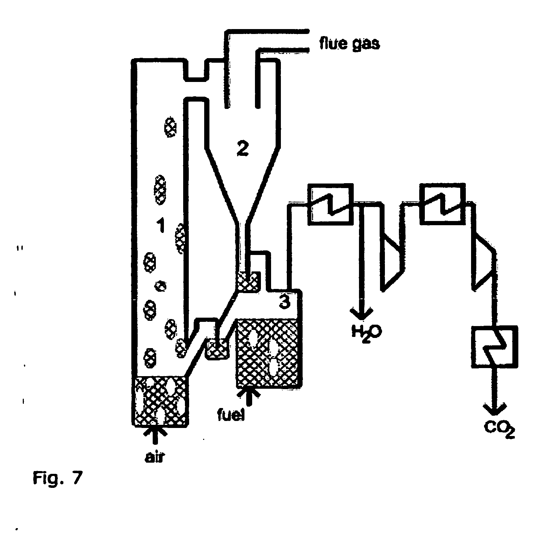

Le principe de combustion par boucle chimique est maintenant bien connu (Mohammad M. Hossain, Hugo I. de Lasa, Chemical-looping combustion (CLC) for inherent CO2 separations-a review, Chemical Engineering Science 63 (2008) 4433 - 4451; Lyngfelt A., Johansson M., and T. Mattisson, "Chemical Looping Combustion, status of development", in CFB IX, J.Werther, W.Nowak, K.-E. Wirth and E.-U. Hartge (Eds.), Tutech Innovation, Hamburg (2008, Figure 7). Sur la figure 7 sont représentés schématiquement le réacteur « air » (1) dans lequel sont oxydés les oxydes métalliques, un cyclone (2) permettant de séparer les particules du gaz, et le réacteur « fuel » ou réacteur de combustion (3), siège de la réduction des oxydes métalliques. La mise en oeuvre de la boucle chimique dans une installation en continu fait cependant encore l'objet de nombreuses investigations et développements.

Dans une installation de combustion classique en lit circulant, la circulation interne de solides dans la boucle de circulation est dépendante du débit d'air introduit dans le lit circulant.

Dans un procédé CLC de combustion par boucle chimique, le contrôle de la combustion est en revanche dépendant de la quantité de particules solides alimentées au contact du combustible. La circulation de particules de masse active circulant dans l'enceinte de combustion conditionne la quantité d'oxygène disponible pour la combustion et l'état final d'oxydation de la masse active à l'issue de la combustion. Une fois la combustion réalisée, la masse active (oxyde métallique le plus souvent) doit être oxydée de nouveau au contact de l'air dans une enceinte distincte. La circulation entre les deux enceintes va conditionner:
- l'échange d'oxygène entre le réacteur de réduction et le réacteur d'oxydation ;
- l'échange de chaleur entre le réacteur de combustion et le réacteur d'oxydation ;
- le passage de gaz entre l'une et l'autre de ces enceintes qui doit être minimisé.

Il est donc important de pouvoir contrôler la circulation de solides dans le réacteur air et dans le réacteur de combustion, indépendamment des débits de gaz circulant et conditionnant le transport des particules à l'intérieur de chacune de ces enceintes (air dans le réacteur d'oxydation, vapeur, hydrocarbures ou fumées de combustion dans le réacteur fuel).

Les différents procédés proposés jusqu'à présent ne permettent pas un contrôle indépendant de la circulation d'oxyde. Ainsi Johannsonn et al. (2006) proposent un procédé de combustion en boucle chimique dans lequel l'oxydation de l'oxyde métallique s'effectue dans un lit circulant. Les oxydes sont séparés dans un cyclone qui alimente par décharge le réacteur fuel dans lequel s'effectue la combustion. L'oxyde métallique est ensuite recyclé dans le réacteur d'oxydation. Un tel système ne permet pas de contrôler la circulation d'oxydes métalliques indépendamment du débit d'air dans le réacteur d'oxydation. Le débit d'oxyde métallique circulant dans le réacteur de combustion ne peut être modifié qu'en changeant le débit d'air dans le réacteur air.

Un autre dispositif est décrit dans le brevet FR2850156. Dans ce cas, les deux réacteurs de combustion et d'oxydation sont des lits circulants. La encore, la circulation entre les deux réacteurs dépend du débit de gaz introduit dans chacune des enceintes. Dans les deux cas, des siphons sont positionnés sur les lignes de transfert permettant le transport des oxydes métalliques. Ces siphons permettent d'assurer l'étanchéité des phases gazeuses entre les deux enceintes, en évitant que du gaz provenant du réacteur d'oxydation circule vers le réacteur de combustion à travers les lignes de transfert, et vice versa. Ces siphons ne permettent pas de contrôler et de modifier la circulation d'oxydes métalliques.

En outre, le procédé de combustion en boucle chimique est mis en oeuvre préférentiellement à haute température (entre 800 et 1200°, typiquement entre 900° et 1000°). Il n'est donc pas possible de contrôler la circulation d'oxydes métalliques en utilisant des vannes mécaniques classiquement utilisées dans d'autres procédés comme le FCC.

Le brevet US 3 969 089 décrit un procédé de combustion en boucle chimique dans lequel les zones réactionnelles sont constituées de deux lits fluidisés. La régulation de la circulation des particules solides de masse active entre les lits fluidisés s'effectue au moyen de vannes non-mécaniques constituées chacune d'une portion de canalisation descendante, d'une portion de canalisation horizontale et d'un coude reliant les deux portions. La régulation des débits d'aération dans les vannes non-mécaniques s'effectue à l'aide de capteurs de températures installés dans les lits fluidisés.

L'objet de l'invention est donc de proposer un nouveau procédé permettant un contrôle de la circulation des solides dans la boucle chimique indépendant des débits de gaz circulant dans les enceintes de combustion (réduction) et d'oxydation.

### OBJET DE L'INVENTION

Un objet de la présente invention est un procédé de combustion en boucle chimique permettant d'effectuer la combustion totale ou partielle d'hydrocarbures gazeux, liquide ou solide.

Le procédé selon l'invention est mis en oeuvre dans une installation comprenant au moins deux zones réactionnelles fluidisées, l'une mettant en contact des particules solides de masse active (de type oxydes métalliques par exemple) avec de l'air pour oxyder les particules, l'autre mettant en contact les hydrocarbures avec la masse active pour effectuer les réactions de combustion, l'oxygène de combustion étant apporté par la réduction des particules de masse active.

Dans le procédé selon l'invention, la circulation des solides (particules de masse active jouant le rôle de porteurs d'oxygène) entre les différentes zones réactionnelles est contrôlée par des vannes non mécaniques de type vannes en L, constituées chacune d'une canalisation sensiblement verticale puis d'une canalisation sensiblement horizontale, un gaz de contrôle étant injecté en amont du coude.

La présente invention concerne également l'utilisation dudit procédé de combustion en boucle chimique avec contrôle de la circulation des solides pour la production de chaleur, pour la production de gaz de synthèse ou pour la production d'hydrogène.

### DESCRIPTION DE L'INVENTION

### Résumé de l'invention

L'invention concerne un procédé de combustion en boucle chimique d'au moins une charge hydrocarbonée dans au moins une zone réactionnelle de réduction (i) et au moins une zone réactionnelle d'oxydation (i+1) en lit fluidisé distinctes, dans lequel on contrôle la circulation des particules solides de masse active entre chacune ou une partie des zones réactionnelles au moyen d'une ou plusieurs vannes non mécaniques constituées chacune d'une portion de canalisation sensiblement verticale, d'une portion de canalisation sensiblement horizontale, et d'un coude reliant les deux portions, en transportant les particules solides entre deux zones réactionnelles successives par :
- introduction des particules solides provenant de la zone réactionnelle (i) ou (i+1) par l'extrémité supérieure de la portion de canalisation sensiblement verticale de ladite vanne ;
- injection d'un gaz de contrôle avec un débit d'aération donné en amont du coude de ladite vanne ;
- contrôle des conditions de pression différentielle aux bornes de la ou des vanne(s) non mécanique(s) pour régler le débit des particules solides dans la portion de canalisation sensiblement horizontale de ladite vanne, en fonction du débit d'aération,
- alimentation de la zone réactionnelle successive (i+1) ou (i) de la boucle par les particules solides sortant de la ou des vannes non mécaniques.

Chaque zone réactionnelle peut être constituée d'un ensemble d'un ou plusieurs réacteurs fluidisés arrangés entre eux.

On peut positionner plusieurs vannes non mécaniques en parallèle entre deux zones réactionnelles successives.

Dans un mode de réalisation du procédé selon l'invention :
- on introduit en outre entre (au moins) deux zones réactionnelles i et (i+1) successives et en aval de la ou des vanne(s) non mécanique(s) un gaz de transport dans une conduite ascendante de transport (« lift »), ladite conduite étant alimentée par les particules solides sortant de la ou des vannes non mécanique(s),
- on effectue le transport des particules solides de la zone (i) vers la zone (i+1) par passage des particules fluidisées dans la ou les vanne(s) non mécanique(s) située(s) entre les zones (i) et (i+1), puis par transport des particules solides au moyen d'au moins un gaz de transport injecté dans la conduite ascendante de transport, et on sépare les particules solides du gaz de transport grâce à des moyens de séparation gaz-solide situés en sortie de la conduite ascendante pour alimenter la zone (i+1) en particules solides.
- on effectue le transport des particules solides en sortie de la zone (i+1) vers la zone (i) par passage des particules fluidisées dans la ou les vanne(s) non mécanique(s) située(s) entre les zones (i+1) et (i), puis par transport des particules solides au moyen d'au moins un gaz de transport injecté dans la conduite ascendante de transport, et on sépare les particules du gaz de transport grâce à des moyens de séparation gaz-solide situés en sortie de la conduite ascendante pour alimenter la zone (i) en particules solides.

Dans un autre mode de réalisation du procédé selon l'invention, une zone réactionnelle (i+1) est située en partie au moins au-dessus de la zone réactionnelle précédente (i) et :
- on transporte les particules solides de la zone (i+1) à la zone (i) par écoulement gravitaire au moyen de la ou des vanne(s) non mécanique(s) située(s) entre les zones (i+1) et (i) ;
- on effectue le transport des particules solides de la zone (i) vers la zone (i+1) par passage des particules fluidisées dans la ou les vanne(s) non mécanique(s) située(s) entre les zones (i) et (i+1), puis par transport des particules solides au moyen d'au moins un gaz de transport injecté dans une conduite ascendante de transport, et on sépare les particules solides du gaz de transport grâce à des moyens de séparation gaz-solide situés en sortie de la conduite ascendante pour alimenter la zone (i+1) en particules solides.

Il est possible de contrôler la circulation des solides par asservissement du débit d'aération du gaz de contrôle des vannes non mécaniques à des mesures de niveau dans les réacteurs fluidisés et/ou de pertes de charge dans les canalisations de transport, effectuées dans les zones réactionnelles.

Ainsi, le débit d'aération du gaz de contrôle (4) peut être contrôlé par une vanne de régulation (21) asservie (23) à la mesure du niveau (25) dans au moins un lit fluidisé de la zone réactionnelle de réduction (1) et le débit d'aération du gaz de contrôle (11) peut être contrôlé par une vanne de régulation (22) asservie (24) à la mesure de la perte de charge (26) dans la conduite ascendante de transport des particules vers la 1^{ère} zone réactionnelle (12).

Avantageusement, on choisit une longueur de la portion horizontale de la ou des vanne(s) non mécanique(s) Lh comprise entre 1 et 20 fois le diamètre de la portion de conduite horizontale Dh, préférentiellement comprise entre 3 et 7 fois Dh.

Avantageusement, on choisit le diamètre de la portion de conduite verticale Dv supérieur ou égal au diamètre de la portion du conduite horizontale Dh de la ou des vanne(s) non mécanique(s).
De préférence, on choisit le diamètre de la portion de conduite verticale Dv et le diamètre de la portion de conduite horizontale Dh de la ou des vanne(s) non mécanique(s) sensiblement identiques.

Avantageusement, on positionne le point d'injection de gaz de contrôle en amont du coude à une distance x (différence entre la hauteur du point d'injection dans la partie verticale et le point le plus bas de la vanne non mécanique) de l'ordre de 1 à 5 fois le diamètre de la portion de conduite verticale Dv.

De préférence, les particules solides de masse active appartiennent au groupe B de la classification de Geldart.

De manière très préférée, les particules solides de masse active sont des oxydes métalliques.

L'invention concerne également l'utilisation du procédé selon l'invention pour la production d'hydrogène, pour la production de gaz de synthèse, ou pour la production de chaleur.

### Description détaillée de l'invention

La combustion en boucle chimique permet de produire de la chaleur, du gaz de synthèse, de l'hydrogène par circulation de particules solides contenant des masses actives jouant le rôle de porteur d'oxygène, telles que des oxydes métalliques, entre plusieurs zones réactionnelles dans lesquelles l'oxyde métallique est successivement exposé au contact avec un milieu oxydant (par exemple de l'air) puis un milieu réducteur (par exemple un hydrocarbure gazeux, liquide, ou solide).

Afin de faciliter la circulation et le contact, l'invention concerne un procédé dans lequel les zones réactionnelles sont constituées de réacteurs en lit fluidisé.

Dans l'optique de production de chaleur, les particules de masse active (par exemple des particules d'oxyde métallique) sont avantageusement mises au contact de l'air dans un lit fluidisé, dans lequel les oxydes métalliques sont oxydés, puis elles sont transportées par des conduits dans un lit fluidisé dans lequel les oxydes métalliques sont mis au contact d'hydrocarbures, par exemple le méthane, du gaz naturel, un fuel lourd contenant des résidus de distillation pétrolière, du charbon ou du coke de pétrole. L'oxyde est alors réduit au contact des hydrocarbures et celui-ci brûle au contact de l'oxygène fourni par les particules. Les fumées de la zone de combustion contiennent essentiellement les produits résultant de la combustion partielle ou totale (CO, H2, CO2, H2O, SOx...) en l'absence d'azote, le lit pouvant être fluidisé par des fumées de combustion, de la vapeur d'eau par exemple. De ce fait, les fumées sont ensuite facilement traitées pour concentrer si nécessaire le CO2 ou le gaz de synthèse produit (condensation de l'eau, désulfuration des fumées), ce qui rend le captage du CO2 ou l'utilisation du gaz de synthèse facile et intéressante. La chaleur de combustion peut être récupérée par échange de chaleur à l'intérieur des zones réactionnelles pour produire de la vapeur ou toute autre utilisation.

Dans l'optique de la production d'hydrogène, il est également possible d'intégrer d'autres zones réactionnelles dans le procédé, dans lesquelles on expose par exemple les particules contenant les oxydes métalliques réduits à un hydrocarbure ou à de la vapeur d'eau.

Les conditions dans lesquelles s'effectuent les réactions de réduction et d'oxydation par contact avec les oxydes métalliques sont sévères. Les réactions s'effectuent généralement entre 800 et 1200°C, typiquement entre 900 et 1000°C. Les procédés destinés à la production d'énergie opèrent avantageusement à une pression la plus proche possible de la pression atmosphérique. Les procédés destinés à la production de gaz de synthèse ou d'hydrogène opèrent préférentiellement à des pressions plus élevées, qui permettent la mise en oeuvre en aval de procédés utilisant les produits de réaction pour minimiser la consommation énergétique liée à la compression des gaz produits, typiquement comprise entre 20 et 50 bars, par exemple 30 bars dans le cas de l'utilisation du gaz de synthèse comme charge d'un procédé de synthèse Fischer Tropsch.

Les temps de réaction requis pour effectuer les réactions d'oxydation et de réduction dépendent de la nature des charges traitées et des oxydes métalliques utilisés et varient de quelques secondes à une dizaine de minutes environ. Les réactions de combustion des charges liquides et solide nécessitent en général des temps de réaction plus élevés, par exemple de l'ordre de plusieurs minutes.

### Nature des particules solides de masse active

L'installation et le procédé selon l'invention peuvent être mis en oeuvre avec tout type de masse active. De préférence, les particules de masse active sont des particules d'oxydes métalliques.

La mise en oeuvre d'un procédé de combustion en boucle chimique requiert des quantités de masse active importantes au contact du combustible.

De préférence, ces solides sont conditionnés sous la forme de poudre, de diamètre de Sauter compris entre 30 et 500 microns, et de masse volumique de grain comprise entre 1400 et 8000 kg/m3, préférentiellement entre 1400 et 5000 kg/m3.

En fonction de la granulométrie des particules, les propriétés d'écoulement des particules varient (Geldart, 1973). Ainsi, les particules du groupe A de la classification de Geldart, plus fines, sont caractérisées par des vitesses de fluidisation plus faibles et des caractéristiques de fluidisation à basse vitesse permettant d'envisager un transport dense fluidisé. Les particules du groupe B de la classification de Geldart, plus grosses, sont caractérisées par des vitesses de fluidisation plus élevés et des caractéristiques de fluidisation qui permettent d'envisager un transport dense non fluidisé dans des canalisations entre deux enceintes réactionnelles.

Dans le cas où la masse active est constituée d'oxydes métalliques, ces derniers sont généralement soit contenus dans des particules de minerais (oxydes du Fe, Ti, Ni, Cu, Mg, Mn, Co, V, utilisés seuls ou en mélange), soit dans des particules résultant de traitements industriels (résidus de l'industrie sidérurgique ou minière, catalyseurs de l'industrie chimique ou du raffinage usagés). On peut également utiliser des matériaux synthétiques, tels que par exemple des supports d'alumine ou de silice alumine sur lesquels on aura déposé des métaux qui peuvent être oxydés (oxyde de nickel par exemple).

D'un oxyde métallique à l'autre, la quantité d'oxygène théoriquement disponible varie considérablement et peut atteindre des valeurs élevées voisines de 30%. Selon les matériaux cependant, la capacité maximale d'oxygène réellement disponible n'excède en général pas plus de 20% de l'oxygène présent. La capacité de ces matériaux à céder de l'oxygène n'excède donc au global pas plus de quelques pourcents en poids des particules et varie considérablement d'un oxyde à un autre, généralement de 0,1 à 15%, et souvent entre 0,3 à 1% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, et entre ces enceintes, si l'on confère aux particules les propriétés d'un fluide (fluidisation).

### Circulation des solides entre les zones réactionnelles

Le contrôle de la circulation des particules solides jouant le rôle de masse active (ou porteurs d'oxygène), tels que des particules d'oxydes métalliques par exemple, est essentiel pour le bon fonctionnement du procédé en boucle chimique. En effet, le transport des particules entre les enceintes conditionne le transport d'oxygène, réactif essentiel au bon fonctionnement du procédé et les échanges de chaleur entre les différentes zones, et donc le niveau de température dans lequel chacune des zones opérera en fonction de la température dans les autres zones. Le transport des particules doit également être étudié comme vecteur d'échange de gaz entre les différentes zones, les particules en écoulement dans les zones de transfert pouvant entraîner des gaz d'une zone réactionnelle à l'autre.

Aux niveaux de température envisagés, les vannes mécaniques ne peuvent pas être utilisées pour contrôler la circulation de solide entre deux zones réactionnelles, sauf si l'on refroidit l'écoulement avant contact avec la vanne, solution énergétiquement pénalisante et technologiquement complexe. De ce fait, l'objet de l'invention consiste à mettre en oeuvre un procédé utilisant les vannes non mécaniques de type L-Valve ou "vanne en L", constituées d'une conduite sensiblement verticale, d'une conduite sensiblement horizontale, un gaz de contrôle étant injecté en amont du coude constitué par les deux canalisations.

Les particules provenant de la première zone réactionnelle entrent dans la vanne en L par l'extrémité supérieure de la conduite sensiblement verticale, alimentant la vanne par des moyens de soutirage (cône, canalisation inclinée, puits de soutirage...) bien connus de l'homme du métier.
Elles s'écoulent ensuite dans la partie verticale en écoulement granulaire, la différence de vitesse réelle entre les particules et le gaz étant inférieure à la vitesse minimale de fluidisation.
Le gaz de contrôle injecté dans la vanne en L peut soit monter à contre courant des particules descendant dans la conduite verticale, soit s'écouler vers le bas avec les particules et favoriser l'écoulement des particules dans la partie horizontale de la vanne.

La répartition entre le gaz montant et le gaz descendant dépend des conditions de pression différentielle aux bornes de la vanne en L. Si la pression en amont de la vanne augmente par rapport à la pression en aval de la vanne par exemple, alors on pourra normalement constater que la proportion de gaz montante diminuera. Le débit de solide dans la partie horizontale dépend de la quantité de gaz descendant et circulant avec les particules dans la partie horizontale.

### Dimensionnement de la vanne en L

On notera Dv le diamètre de la conduite de la partie verticale de la vanne en L et Dh le diamètre de la conduite dans la partie horizontale, Lh la longueur de la canalisation horizontale et Lv la longueur de la canalisation verticale, et x la distance entre l'élévation du point d'injection du gaz de contrôle dans la partie verticale et la partie la plus basse de la vanne en L.

La hauteur Lv dépend de la position relative des deux enceintes réactionnelle et des gains ou pertes de pression à compenser pour boucler le bilan pression du procédé. Cette hauteur résultera donc du dimensionnement de l'installation au cas par cas par l'homme du métier.

De manière avantageuse, la longueur de canalisation horizontale doit être limitée pour assurer un écoulement stable de particules. Cette longueur Lh sera préférentiellement comprise entre 1 et 20 Dh, préférentiellement comprise entre 3 et 7 Dh. Le fonctionnement de la vanne en L sera favorisé si les diamètres Dv et Dh sont sensiblement identiques. Il est dans tous les cas préférable que le diamètre de la partie horizontale Dh soit supérieur ou égal à Dv.

Enfin, le positionnement du point d'injection de gaz de contrôle en amont du coude sera positionné à proximité de celui ci, préférentiellement à une distance X voisine de l'ordre de 1 à 5 Dv, les valeurs typiques étant voisine de X= 2-3 Dv.

Entre deux zones réactionnelles, il est possible de positionner une ou plusieurs vannes en L en parallèle.

### Fonctionnement de l'installation et du procédé selon l'invention

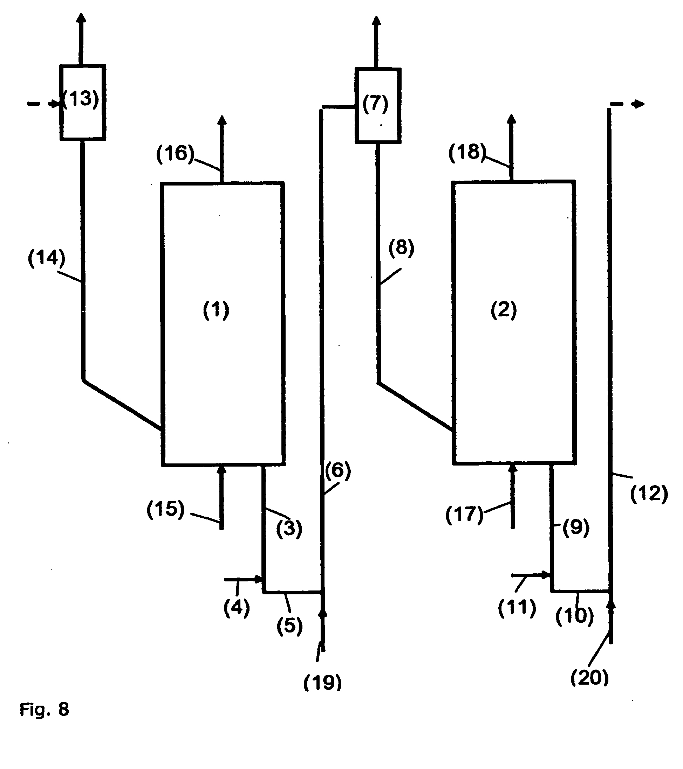

La figure 8 ci-dessous décrit un premier mode de mise en oeuvre de l'invention. Le procédé mis en oeuvre est un procédé de combustion utilisant le principe de la boucle chimique.
Une première zone réactionnelle de réduction (1) permet le contact entre un hydrocarbure gazeux, liquide ou solide (15) et les particules de masse active (ici d'oxyde métallique) pour effectuer la combustion. La zone réactionnelle peut être un simple réacteur en lit fluidisé constitué d'une boite de distribution du gaz sur la section, du lit fluidisé et des moyens de dépoussiérage des effluents gazeux (16) constitués dans le cas présent de fumées concentrées en CO2, ou bien une combinaison de lits fluidisés, ou de lits fluidisés circulants avec recyclage interne ou externe de particules.
Dans cette zone réactionnelle, au moins une partie de la zone de contact entre les hydrocarbures et l'oxyde métallique est constituée d'une phase fluidisée dense. Les particules d'oxyde métallique sont soutirées de la première zone réactionnelle (1), ce soutirage alimentant un conduit vertical (3) se terminant par un conduit horizontal (5) constituant une vanne en L. Un gaz de contrôle (par exemple de l'azote, de la vapeur d'eau ou des fumées) est injecté dans cette vanne en L par une conduite (4). La circulation de solide dans la vanne en L (3-5) dépend de la quantité de gaz injecté par la conduite (4). Les particules sortent de la vanne en L et alimentent une conduite ascendante (« lift ») de transport (6) alimenté par un gaz de transport (19). En sortie du lift (6), des moyens de séparation (7), tels que des cyclones, permettent de séparer le gaz de transport des particules. Lesdites particules sont ensuite transportées par une conduite (8) vers la deuxième zone réactionnelle (2) dans laquelle s'effectuent les réactions d'oxydation des particules d'oxyde par contact avec l'air qui alimente la deuxième zone réactionnelle par une conduite (17). La zone réactionnelle peut être un simple réacteur en lit fluidisé constitué d'une boite de distribution du gaz sur la section, du lit fluidisé et des moyens de dépoussiérage des effluents gazeux (18) constitués dans le cas présent d'air appauvri, ou bien une combinaison de lits fluidisés, ou de lits fluidisés circulants avec recyclage interne ou externe de particules. Dans cette zone réactionnelle au moins une partie de la zone de contact entre les hydrocarbures et l'oxyde métallique est constituée d'une phase fluidisée dense. Les particules d'oxyde métallique sont soutirées de la deuxième zone réactionnelle (2), ce soutirage alimentant une conduite verticale (9) se terminant par une conduite horizontale (10) constituant une vanne en L. Un gaz de contrôle (par exemple de l'azote, de la vapeur d'eau, ou de l'air) est injecté dans cette vanne en L (11). La circulation de solide dans la vanne en L (9-10) dépend de la quantité de gaz injecté par la conduite (11). Les particules sortent de la vanne en L (9-10) et alimentent une conduite ascendante (« lift ») de transport (12) alimentée par un gaz de transport (20). En sortie du lift des moyens de séparation (13), tels que des cyclones, permettent de séparer le gaz de transport des particules qui sont transportées par une conduite (14) vers la première zone réactionnelle (1) dans laquelle s'effectuent les réactions de combustion.
La figure 8 décrit un procédé et une installation à deux zones réactionnelles, mais il est possible de considérer un enchaînement de trois ou plusieurs zones réactionnelles agencées séquentiellement comme sur la figure 8.

Dans la mise en oeuvre du procédé selon l'invention, le transfert de particules entre les zones réactionnelles ne dépend que de la quantité de gaz de contrôle injectée dans les vannes en L. Ainsi, il est possible de faire varier la circulation d'oxydes métalliques en modifiant le débit de gaz de contrôle injecté dans les vannes en L, tous les autres fluides (15, 17, 19, 20) étant maintenus constants.

Dans les vannes en L, l'écoulement des particules dans la partie verticale (3, 9) est un écoulement granulaire non fluidisé dense, les particules s'écoulant avec une vitesse relative par rapport au gaz circulant dans ces conduites inférieure à la vitesse minimum de fluidisation. La mise en oeuvre du procédé s'effectuera préférentiellement avec des particules appartenant au groupe B de la classification de Geldart. Le gaz injecté dans les vannes en L (4, 11) représente généralement une faible proportion (<1%) du gaz nécessaire pour assurer le transport (19, 20), la vitesse minimale de fluidisation de ces matériaux étant très faible devant la vitesse de transport des particules.

Le gaz de transport utilisé dans les conduites ascendantes de transport (« lifts ») (6, 12) peut donc être constitué de vapeur, de fumées recyclées, d'air ou d'inerte, et, en fonction de son choix, peut permettre de créer une zone tampon évitant le mélange des gaz entraînés d'une zone réactionnelle à l'autre.

Dans la configuration décrite sur la Figure 8, la vanne en L alimente une conduite ascendante (« lift ») de transport permettant le transport des particules. Le lift est équipé en sortie de moyens de séparation permettant le désengagement du gaz de transport. Il est donc possible d'introduire entre les deux enceintes réactionnelles (1) et (2) un gaz pour le transport des particules, ce gaz ne pénétrant ni dans l'enceinte (1), ni dans l'enceinte (2) grâce aux moyens de séparation situés en sortie du lift de transport. Cette configuration est particulièrement avantageuse lorsqu'on souhaite une étanchéité des gaz entre les enceintes réactionnelles. En effet, le gaz servant au contrôle de la circulation dans la vanne en L et le gaz de transport dans le lift peuvent être composé de gaz inertes (vapeur d'eau, azote, dioxyde de carbone...) qui feront étanchéité entre la zone réactionnelle (1) dans laquelle on peut trouver des hydrocarbures en phase gazeuse et la zone réactionnelle (2) dans laquelle on trouve de l'oxygène en phase gazeuse. Les quantités de gaz entraînées des zones réactionnelles (1) ou (2) vers les vannes en L sont nulles ou très faibles. Elles dépendent des élévations des pressions respectives des enceintes et des débits de particules circulant. Ces faibles quantités seront diluées par le gaz de transport de lift (par exemple un inerte) et évacuées de l'unité par les sorties gaz des séparateurs (7, 13) situés en sortie des lifts de transport. On voit donc que la configuration constituée de l'agencement de vannes en L et de lift entre les zones réactionnelles permet non seulement de contrôler la circulation, mais également d'assurer l'étanchéité gazeuse entre les zones réactionnelles.

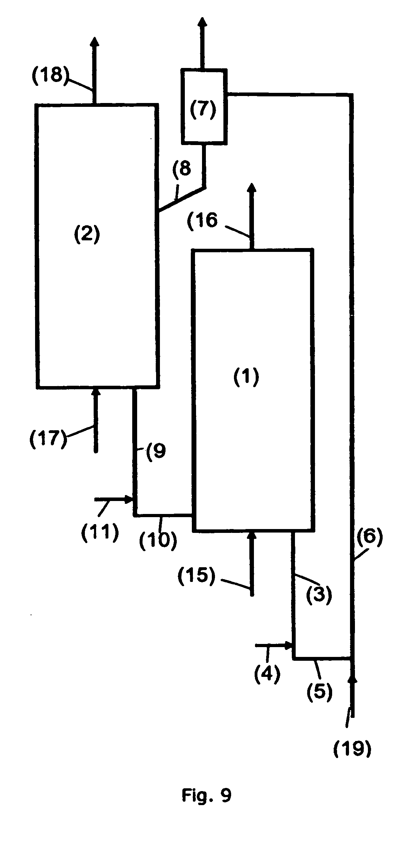

La figure 9 représente un autre agencement possible, différent simplement de la configuration présentée sur la figure 8 par le fait que la zone réactionnelle d'oxydation (2) est située en partie au moins au-dessus de la zone de réduction-combustion (1). Il est alors possible de transporter les particules d'oxyde de la zone (2) à la zone (1) sans utiliser de lift de transport. Une simple vanne en L (9, 10, 11) permet alors d'effectuer le transfert de particules de la zone (2) vers la zone (1). Le transfert de la zone (1) vers la zone (2) s'effectue lui en utilisant une vanne en L (3, 4, 5), une conduite ascendante de transport (6) et des moyens de séparation (7) des oxydes métalliques et du gaz de transport.

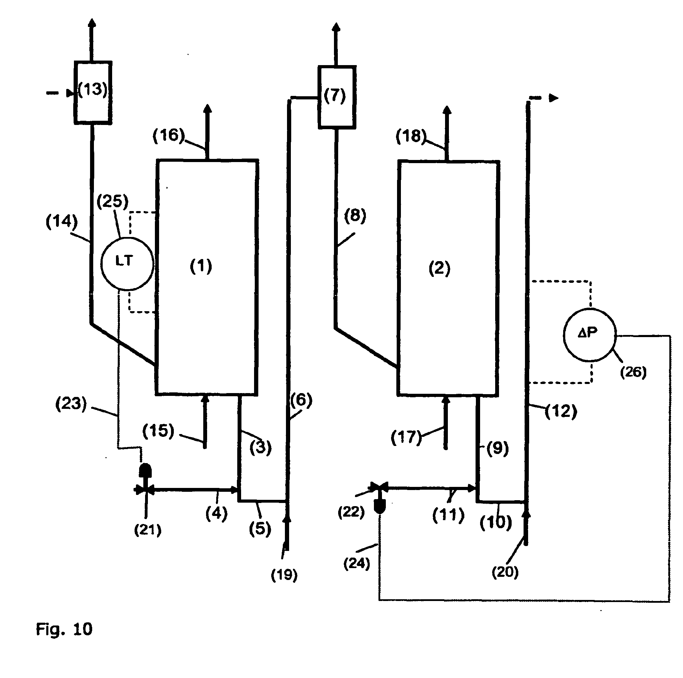

Il est possible de contrôler la circulation de solides dans le procédé entre les différentes enceintes grâce à une régulation du gaz injecté dans les vannes en L. La figure 10 reprend le procédé décrit sur la figure 8. Si une vanne régule l'injection de gaz dans la vanne en L, il est possible d'asservir la quantité de gaz injecté dans la vanne en L à des mesures de niveau dans un lit fluidisé en phase dense ou à une mesure indirecte du débit en circulation tel que la perte de charge dans un lift de transport. Ainsi, sur la figure 10, l'injection de gaz (4) est contrôlée par une vanne de régulation (21) asservie (23) à la mesure du niveau (25) dans un lit fluidisé de l'enceinte réactionnelle (1) et l'injection de gaz (11) est contrôlée par une vanne de régulation (22) asservie (24) à la mesure de la perte de charge (26) dans le lift (12). D'autres stratégies d'asservissement sont possibles.

### Exemple:

Afin d'illustrer le fonctionnement de l'invention, est donné ci dessous l'exemple d'une boucle de circulation dimensionnée selon les caractéristiques principales de l'invention, et mise en oeuvre dans les conditions ambiantes sans réaction.

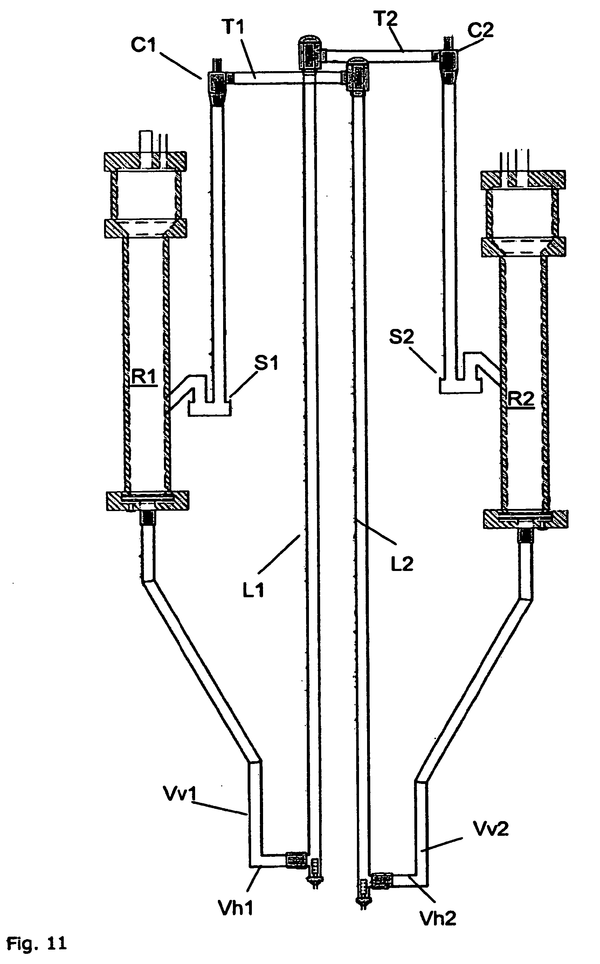

La maquette (figure 11) est constituée principalement de deux lits fluidisés identiques R1 et R2 de 10 cm de diamètre, reliés entre eux par deux boucles dites circulantes. Chaque boucle est formée d'un lift (conduite ascendante de transport) de 20 mm de diamètre et 2.5 m de longueur, alimenté par une vanne en L, appelée aussi jambe en L, constituée d'une section verticale et d'une section horizontale de même diamètre (16mm) dans laquelle un gaz d'aération est injecté à une élévation de 30mm par rapport au bas de la vanne en L. Les particules sont soutirées du lit fluidisé (R1 ou R2) au sommet de la partie verticale (Vv1 ou Vv2) de la vanne en L. Elles s'écoulent dans la partie verticale puis dans la partie horizontale (Vh1 ou Vh2) de la vanne en L. Elles sont ensuite transportée dans un lift (L1 ou L2) à l'extrémité duquel un cyclone (C1 ou C2) sépare le gaz de transport du lift des particules. Les particules sont réinjectée dans le lit fluidisé (R2 ou R1) à travers une jambe de retour et un siphon (S1 ou S2).

Les particules utilisées au cours de cet essai sont des particules de sable de diamètre moyen 205 microns et de masse volumique de grain égale à 2500 kg/m3. Dans les lits fluidisés R1 et R2, les particules sont fluidisées à une vitesse superficielle de 0.08 m/s. Cette vitesse de gaz est supérieure à la vitesse minimale de fluidisation (Umf) qui est de l'ordre de 0.03 m/s. Les particules du solide descendent du premier réacteur dite "R1" dans la jambe verticale "Vᵥ₁" puis leur circulation dans la jambe horizontale Vₕ₁ est assurée par l'injection d'un gaz de contrôle (débit d'aération) introduit en amont du changement de direction de l'écoulement dans la vanne en L. C'est en réglant le débit d'aération que l'on contrôle le débit de solide. Dans le lift, on maintient un débit de gaz de transport constant. Ce gaz de transport est introduit au bas du lift et se différencie du gaz d'aération introduit dans la vanne en L.

Afin d'assurer un transport des particules satisfaisant, la vitesse de gaz UL1 ou UL2 dans les lifts L1 ou L2 est maintenue constante et égale à 6 m/s. En aval du lift, la suspension circule dans une ligne de transport horizontale "T1 ou T2" alimentant un cyclone "C1 ou C2" qui permet la séparation entre les particules et le gaz. Le gaz quitte le cyclone par la sortie supérieure du cyclone et le solide est envoyé vers un siphon "S1 ou S2 " et ensuite renvoyé vers le deuxième réacteur (R2 ou R1).

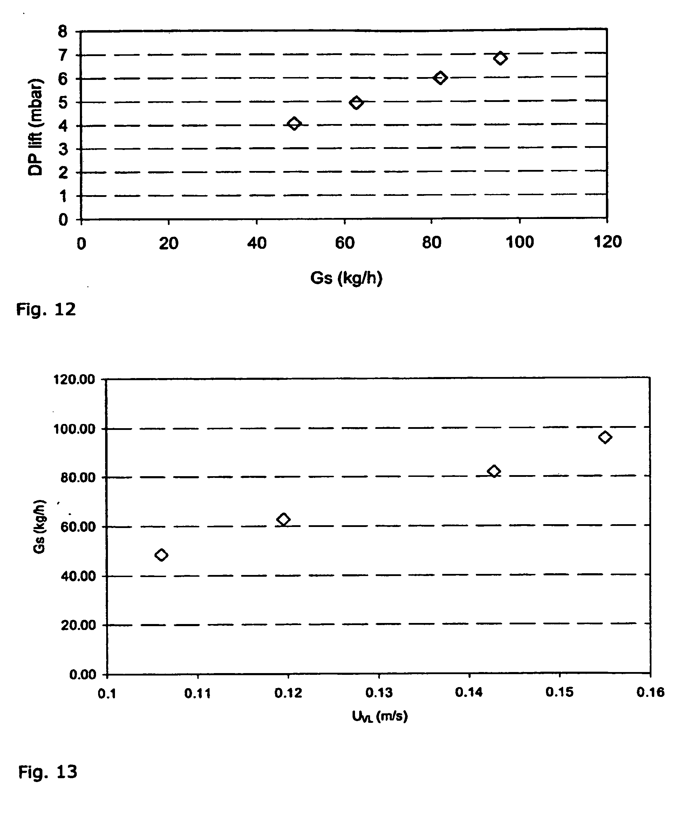

La quantité de gaz de contrôle (gaz d'aération) injectée dans la vanne en L est rapportée à la section de passage dans la partie verticale de la vanne en L (diamètre=16mm). Il est ainsi possible de calculer la vitesse superficielle en fut vide de l'aération dans cette section. Par la suite, l'aération dans la vanne en L 1 sera exprimée par sa vitesse superficielle en fut vide Uᵥ₁ et l'aération dans la vanne en L 2 sera exprimée par sa vitesse superficielle en fut vide Uᵥ₂
Les quantités de gaz envoyé dans les vannes en L, qui correspondent aux vitesses Uᵥ₁ et Uᵥ₂ permettent respectivement de contrôler le débit de solide envoyé vers le réacteur R2 via le lift L1 (figure 12) et vers le réacteur R1 via le lift R2.

Dans la boucle, il est possible d'estimer les débits de solide grâce à des fonctionnements non stationnaires au cours desquels les variations de niveau en fonction du temps dans les enceintes permettent de mesurer les débits de solides instantanés. Ces débits de solides sont ensuite corrélés aux pertes de charge dans les lifts de transport. En effet, il est connu que pour un débit volumique de gaz fixe, la perte de charge dans un lift augmente lorsque le débit de solide augmente. Dans cet exemple l'augmentation de cette perte de charge est sensiblement linéaire en fonction du débit de solide, comme le montre la figure 12, les deux lifts présentant des pertes de charge similaires (leur géométrie et la vitesse de transport imposée sont identiques).

Une fois ces calibrations préalables effectuées, un fonctionnement continu dans l'installation est établi en imposant un débit d'aération du gaz de contrôle identique dans chacune des deux vannes en L. Lorsque le débit du gaz de contrôle injecté correspond à une vitesse de gaz dans chacune des vannes en L (Uv1 et Uv2) égale à 0.15 m/s, un fonctionnement stable est observé, les niveaux dans chacune des enceintes restant constants au cours du temps. La perte de charge mesurée dans ces conditions dans chacun des lifts est d'environ 5 mbars, ce qui correspond à un débit de solide dans chacun des lifts d'environ 60 kg/heure (Fig.12).

Le débit d'aération dans chacune des vannes en L est alors augmenté pour atteindre une vitesse superficielle (Uv1 et Uv2) de 0.175 m/s. La circulation de solide passe alors à environ 80 kg/h (perte de charge relevée dans les lifts égale à 6 mb). En réduisant ensuite le débit d'aération dans les vannes en L à 0.13 m/s, la circulation de solide diminue aux alentours de 48 kg/h (perte de charge relevée dans les lifts égale à 4 mb).
Il ressort de cet exemple que la circulation de solide dans l'installation ne dépend que de l'aération imposée par le gaz de contrôle dans les vannes en L. La Figure 13 montre la relation entre le débit d'aération dans chaque vanne en L et le débit de solide circulant dans l'installation.

## Revendications

1. Procédé de combustion en boucle chimique d'au moins une charge hydrocarbonée dans au moins une zone réactionnelle de réduction (i) et au moins une zone réactionnelle d'oxydation (i+1) en lit fluidisé distinctes, dans lequel on contrôle la circulation des particules solides de masse active entre chacune ou une partie des zones réactionnelles au moyen d'une ou plusieurs vannes non mécaniques constituées chacune d'une portion de canalisation sensiblement verticale, d'une portion de canalisation sensiblement horizontale, et d'un coude reliant les deux portions, en transportant les particules solides entre deux zones réactionnelles successives par :
- introduction des particules solides provenant de la zone réactionnelle (i) ou (i+1) par l'extrémité supérieure de la portion de canalisation sensiblement verticale de ladite vanne ;
- injection d'un gaz de contrôle avec un débit d'aération donné en amont du coude de ladite vanne ;
- contrôle des conditions de pression différentielle aux bornes de la ou des vanne(s) non mécanique(s) pour régler le débit des particules solides dans la portion de canalisation sensiblement horizontale de ladite vanne, en fonction du débit d'aération;
- alimentation de la zone réactionnelle successive (i+1) ou (i) de la boude par les particules solides sortant de la ou des vannes non mécaniques.

2. Procédé de combustion en boucle chimique selon la revendication 1 dans lequel chaque zone réactionnelle est constituée d'un ensemble d'un ou plusieurs réacteurs fluidisés arrangés entre eux.

3. Procédé de combustion en boucle chimique selon l'une des revendications 1 ou 2 dans lequel on positionne plusieurs vannes non mécaniques en parallèle entre deux zones réactionnelles successives.

4. Procédé de combustion en boucle chimique selon l'une des revendications 1 à 3 dans lequel :
- on introduit en outre entre (au moins) deux zones réactionnelles (i) et (i+1) successives et en aval de la ou des vanne(s) non mécanique(s) un gaz de transport dans une conduite ascendante de transport, ladite conduite étant alimentée par les particules solides sortant de la ou des vannes non mécanique(s),
- on effectue le transport des particules solides de la zone (i) vers la zone (i+1) par passage des particules fluidisées dans la ou les vanne(s) non mécanique(s) située(s) entre les zones (i) et (i+1), puis par transport des particules solides au moyen d'au moins un gaz de transport injecté dans la conduite ascendante de transport, et on sépare les particules solides du gaz de transport grâce à des moyens de séparation gaz-solide situés en sortie de la conduite ascendante pour alimenter la zone (i+1) en particules solides. on effectue le transport des particules solides en sortie de la zone (i+1) vers la zone (i) par passage des particules fluidisées dans la ou les vanne(s) non mécanique(s) située(s) entre les zones (i+1) et (i), puis par transport des particules solides au moyen d'au moins un gaz de transport injecté dans la conduite ascendante de transport, et on sépare les particules du gaz de transport grâce à des moyens de séparation gaz-solide situés en sortie de la conduite ascendante pour alimenter la zone (i) en particules solides.

5. Procédé de combustion en boucle chimique selon l'une des revendications 1 à 3 dans lequel une zone réactionnelle (i+1) est située en partie au moins au-dessus de la zone réactionnelle précédente (i) et :
- on transporte les particules solides de la zone (i+1) à la zone (i) par écoulement gravitaire au moyen de la ou des vanne(s) non mécanique(s) située(s) entre les zones (i+1) et (i) ;
- on effectue le transport des particules solides de la zone (i) vers la zone (i+1) par passage des particules fluidisées dans la ou les vanne(s) non mécanique(s) située(s) entre les zones (i) et (i+1), puis par transport des particules solides au moyen d'au moins un gaz de transport injecté dans une conduite ascendante de transport, et on sépare les particules solides du gaz de transport grâce à des moyens de séparation gaz-solide situés en sortie de la conduite ascendante pour alimenter la zone (i+1) en particules solides.

6. Procédé de combustion en boucle chimique selon l'une des revendications précédentes dans lequel on contrôle la circulation des solides par asservissement du débit d'aération du gaz de contrôle des vannes non mécaniques à des mesures de niveau dans les réacteurs fluidisés et/ou de pertes de charge dans les canalisations de transport, effectuées dans les zones réactionnelles.

7. Procédé de combustion en boucle chimique selon la revendication 6 dans lequel le débit d'aération du gaz de contrôle (4) est contrôlé par une vanne de régulation (21) asservie (23) à la mesure du niveau (25) dans au moins un lit fluidisé de la zone réactionnelle de réduction (1) et le débit d'aération du gaz de contrôle (11) est contrôlé par une vanne de régulation (22) asservie (24) à la mesure de la perte de charge (26) dans la conduite ascendante de transport des particules vers l'autre zone réactionnelle (12).

8. Procédé selon l'une des revendications précédentes dans lequel on choisit une longueur de la portion horizontale de la ou des vanne(s) non mécanique(s) Lh comprise entre 1 et 20 fois le diamètre de la portion de conduite horizontale Dh, préférentiellement comprise entre 3 et 7 fois Dh.

9. Procédé selon l'une des revendications précédentes dans lequel on choisit le diamètre de la portion de conduite verticale Dv supérieur ou égal au diamètre de la portion du conduite horizontale Dh de la ou des vanne(s) non mécanique(s).

10. Procédé selon la revendication 9 dans lequel on choisit le diamètre de la portion de conduite verticale Dv et le diamètre de la portion de conduite horizontale Dh de la ou des vanne(s) non mécanique(s) sensiblement identiques.

11. Procédé selon l'une des revendications précédentes dans lequel on positionne le point d'injection de gaz de contrôle en amont du coude à une distance x (différence entre la hauteur du point d'injection dans la partie verticale et le point le plus bas de la vanne non mécanique) de l'ordre de 1 à 5 fois le diamètre de la portion de conduite verticale Dv.

12. Procédé de combustion en boucle chimique selon l'une des revendications précédentes dans lequel les particules solides de masse active appartiennent au groupe B de la classification de Geldart.

13. Procédé de combustion en boucle chimique selon l'une des revendications précédentes dans lequel les particules solides de masse active sont des oxydes métalliques.

14. Utilisation du procédé selon l'une des revendications précédentes pour la production d'hydrogène.

15. Utilisation du procédé selon l'une des revendications 1 à 13 pour la production de gaz de synthèse.

16. Utilisation du procédé selon l'une des revendications 1 à 13 pour la production de chaleur.

## Patentansprüche

1. Verfahren zur Chemical-Looping-Combustion mindestens einer Kohlenwasserstoffbeschickung in mindestens einer Reduktionsreaktionszone (i) und mindestens einer Oxidationsreaktionszone (i+1) in verschiedenen Wirbeischichten, wobei die Zirkulation der festen Partikel der aktiven Masse zwischen jeder oder einem Teil der Reaktionszonen mithilfe eines oder mehrerer nicht mechanischer Ventile gesteuert wird, die jeweils aus einem im Wesentlichen vertikalen Leitungsabschnitt, einem im Wesentlichen horizontalen Leitungsabschnitt und einem Krümmer bestehen, der die beiden Abschnitte verbindet, indem die festen Partikel zwischen zwei aufeinander folgenden Reaktionszonen transportiert werden, durch:
- Einführen der festen Partikel, die aus der Reaktionszone (i) oder (i+1) stammen, durch das obere Ende des im Wesentlichen vertikalen Leitungsabschnitts des Ventils;
- Injizieren eines Prüfgases mit einem gegebenen Belüftungsdurchsatz stromaufwärts des Ventilkrümmers;
- Steuern der Differenzdruckbedingungen an den Anschlüssen des nicht mechanischen Ventils oder der nicht mechanischen Ventile, um den Durchsatz der festen Partikel in dem im Wesentlichen horizontalen Leitungsabschnitt des Ventils in Abhängigkeit von dem Belüftungsdurchsatz einzustellen;
- Versorgen der aufeinander folgenden Reaktionszone (i+1) oder (i) des Loops mit den festen Partikeln, die aus dem oder den nicht mechanischen Ventilen austreten.

2. Verfahren zur Chemical-Looping-Combustion nach Anspruch 1, wobei jede Reaktionszone aus einer Gesamtheit von einem oder mehreren Wirbelschichtreaktoren besteht, die zueinander angeordnet sind.

3. Verfahren zur Chemical-Looping-Combustion nach einem der Ansprüche 1 oder 2, wobei mehrere nicht mechanische Ventile parallel zwischen zwei aufeinander folgenden Reaktionszonen angeordnet werden.

4. Verfahren zur Chemical-Looping-Combustion nach einem der Ansprüche 1 bis 3, wobei:
- ferner zwischen (mindestens) zwei aufeinander folgenden Reaktionszonen (i) und (i+1) und stromabwärts des nicht mechanischen Ventils oder der nicht mechanischen Ventile ein Gas in einem aufsteigenden Transportrohr eingeführt wird, wobei das Rohr mit den festen Partikeln versorgt wird, die aus dem oder den nicht mechanischen Ventil(en) austreten,
- der Transport der festen Partikel von der Zone (i) in die Zone (i+1) durch das Hindurchleiten der fluidisierten Partikel durch das oder die nicht mechanische(n) Ventil(e), das/die zwischen den Zonen (i) und (i+1) liegt/liegen, dann durch den Transport der festen Partikel mithilfe mindestens eines Transportgases, das in das aufsteigende Transportrohr injiziert wird, durchgeführt wird und die festen Partikel von dem Transportgas mithilfe von Mitteln zur Gas/Feststoff-Trennung getrennt werden, die am Ausgang des aufsteigenden Rohrs liegen, um die Zone (i+1) mit festen Partikeln zu versorgen.
- der Transport der festen Partikel am Ausgang von Zone (i+1) in die Zone (i) durch das Hindurchleiten der fluidisierten Partikel durch das oder die nicht mechanische(n) Ventil(e), das/die zwischen den Zonen (i+i) und (i) liegt/liegen, dann durch den Transport der festen Partikel mithilfe mindestens eines Transportgases, das in das aufsteigende Transportrohr injiziert wird, durchgeführt wird und die festen Partikel von dem Transportgas mithilfe von Mitteln zur Gas/Feststoff-Trennung getrennt werden, die am Ausgang des aufsteigenden Rohrs liegen, um die Zone (i) mit festen Partikeln zu versorgen.

5. Verfahren zur Chemical-Looping-Combustion nach einem der Ansprüche 1 bis 3, wobei eine Reaktionszone (i+1) mindestens teilweise über der vorhergehenden Reaktionszone (i) liegt, und:
- die festen Partikel von der Zone (i+1) zur Zone (i) durch Abfließen durch Schwerkraft mithilfe des nicht mechanischen Ventils oder der nicht mechanischen Ventile, die zwischen den Zonen (i+1) und (i) liegen, transportiert werden;
- der Transport der festen Partikel von der Zone (i) in die Zone (i+1) durch das Hindurchleiten der fluidisierten Partikel durch das oder die nicht mechanische(n) Ventil(e), das/die zwischen den Zonen (i) und (i+1) liegt/liegen, dann durch den Transport der festen Partikel mithilfe mindestens eines Transportgases, das in ein aufsteigendes Transportrohr injiziert wird, durchgeführt wird und die festen Partikel von dem Transportgas mithilfe von Mitteln zur Gas/Feststoff-Trennung getrennt werden, die am Ausgang des aufsteigenden Rohrs liegen, um die Zone (i+1) mit festen Partikeln zu versorgen.

6. Verfahren zur Chemical-Looping-Combustion nach einem der vorhergehenden Ansprüche, wobei die Zirkulation der Feststoffe durch Servosteuerung des Belüftungsdurchsatzes des Prüfgases der nicht mechanischen Ventile durch Messungen des Niveaus in den Wirbelschichtreaktoren und/oder durch Druckabfallmessungen in den Transportleitungen, die in den Reaktionszonen durchgeführt werden, gesteuert wird.

7. Verfahren zur Chemical-Looping-Combustion nach Anspruch 6, wobei der Belüftungsdurchsatz des Prüfgases (4) durch ein Regelventil (21) gesteuert wird, das durch die Niveaumessung (25) in mindestens einer Wirbelschicht der Reduktionsreaktionszone (1) servogesteuert (23) wird, und wobei der Belüftungsdurchsatz des Prüfgases (11) durch ein Regelventil (22) gesteuert wird, das durch die Druckverlustmessung (26) in der aufsteigenden Leitung zum Partikeltransport in die andere Reaktionszone (12) servogesteuert (24) wird.

8. Verfahren nach einem der vorhergehenden Ansprüche, wobei eine Länge des horizontalen Abschnitts des oder der nicht mechanischen Ventil(e) Lh im Bereich zwischen 1 und 20 Mal dem Durchmesser des Abschnitts der horizontalen Leitung Dh, vorzugsweise im Bereich zwischen 3 und 7 Mal Dh, ausgewählt wird.

9. Verfahren nach einem der vorhergehenden Ansprüche, wobei der Durchmesser des Abschnitts der vertikalen Leitung Dv größer oder gleich dem Durchmesser des Abschnitts der horizontalen Leitung Dh des nicht mechanischen Ventils oder der nicht mechanischen Ventile ausgewählt wird.

10. Verfahren nach Anspruch 9, wobei der Durchmesser des Abschnitts der vertikalen Leitung Dv und der Durchmesser des Abschnitts der horizontalen Leitung Dh des nicht mechanischen Ventils oder der nicht mechanischen Ventile im Wesentlichen identisch sind.

11. Verfahren nach einem der vorhergehenden Ansprüche, wobei der Injektionspunkt des Prüfgases stromaufwärts des Krümmers mit einem Abstand x (Differenz zwischen der Höhe des Injektionspunkts in dem vertikalen Teil und dem tiefsten Punkt des nicht mechanischen Ventils) in der Größenordnung von 1 bis 5 Mal dem Durchmesser des Abschnitts der vertikalen Leitung Dv angeordnet wird.

12. Verfahren zur Chemical-Looping-Combustion nach einem der vorhergehenden Ansprüche, wobei die festen Partikel der aktiven Masse zur Gruppe B der Geldart-Klassifikation gehören.

13. Verfahren zur Chemical-Looping-Combustion nach einem der vorhergehenden Ansprüche, wobei es sich bei den festen Partikeln der aktiven Masse um Metalloxide handelt.

14. Verwendung des Verfahrens nach einem der vorhergehenden Ansprüche zur Herstellung von Wasserstoff.

15. Verwendung des Verfahrens nach einem der Ansprüche 1 bis 13 zur Herstellung von Synthesegas.

16. Verwendung des Verfahrens nach einem der Ansprüche 1 bis 13 zur Herstellung von Wärme.

## Claims

1. A chemical looping combustion method for at least one hydrocarbon feed in at least one distinct fluidized bed reduction reaction zone (i) and at least one distinct fluidized bed oxidation reaction zone (i+1), wherein the circulation of the solid particles of active mass between each or part of the reaction zones is controlled by means of one or more non-mechanical valves consisting each of a substantially vertical line portion, a substantially horizontal line portion and an elbow connecting the two portions, by transporting the solid particles between two successive reaction zones by:
- introducing solid particles coming from reaction zone (i) or (i+1) through the upper end of the substantially vertical line portion of said valve,
- injecting a control gas with a given aeration flow rate upstream from the elbow of said valve,
- controlling the differential pressure conditions at the terminals of the non-mechanical valve(s) so as to adjust the flow rate of the solid particles in the substantially horizontal line portion of said valve, according to the aeration flow rate,
- feeding into the successive reaction zones (i+1) or (i) of the loop the solid particles leaving the non-mechanical valve(s).

2. A chemical looping combustion method as claimed in claim 1, wherein each reaction zone consists of a set of one or more fluidized reactors arranged in relation to one another.

3. A chemical looping combustion method as claimed in any one of claims 1 or 2, wherein several non-mechanical valves are arranged in parallel between two successive reaction zones.

4. A chemical looping combustion method as claimed in any one of claims 1 to 3, comprising:
- additionally feeding between (at least) two successive reaction zones (i) and (i+1), and downstream from the non-mechanical valve(s), a carrier gas in an ascending transport line, said line being fed with the solid particles leaving the non-mechanical valve(s),
- carrying out transport of the solid particles from zone (i) to zone (i+1) through passage of the fluidized particles into the non-mechanical valve(s) located between zones (i) and (i+1), then through transport of the solid particles by means of at least one carrier gas injected into the ascending transport line, and separating the solid particles from the carrier gas by means of gas-solid separation means arranged at the outlet of the ascending line so as to supply zone (i+1) with solid particles,
- carrying out transport of the solid particles from the outlet of zone (i+1) to zone (i) through passage of the fluidized particles into the non-mechanical valve(s) located between zones (i+1) and (i), then through transport of the solid particles by means of at least one carrier gas injected into the ascending transport line, and separating the particles from the carrier gas by means of gas-solid separation means arranged at the outlet of the ascending line so as to supply zone (i) with solid particles.

5. A chemical looping combustion method as claimed in any one of claims 1 to 3, wherein a reaction zone (i+1) is located at least partly above the previous reaction zone (i) and:
- the solid particles are transported from zone (i+1) to zone (i) by gravity flow by means of the non-mechanical valve(s) located between zones (i+1) and (i),
- transport of the solid particles from zone (i) to zone (i+1) is performed by passage of the fluidized particles into the non-mechanical valve(s) located between zones (i) and (i+1), then by transport of the solid particles by means of at least one carrier gas injected into an ascending transport line, and the solid particles are separated from the carrier gas by means of gas-solid separation means arranged at the outlet of the ascending line so as to supply zone (i+1) with solid particles.

6. A chemical looping combustion method as claimed in any one of the previous claims, wherein circulation of the solids is controlled through servo-control of the aeration flow rate of the control gas of the non-mechanical valves by level measurements in the fluidized reactors and/or pressure drop measurements in the transport lines, performed in the reaction zones.

7. A chemical looping combustion method as claimed in claim 6, wherein the aeration flow rate of the control gas (4) is controlled by a regulation valve (21) servo-controlled (23) by the level measurement (25) in at least one fluidized bed of reduction reaction zone (i) and the aeration flow rate of the control gas (11) is controlled by a regulation valve (22) servo-controlled (24) by the pressure drop measurement (26) in the ascending transport line carrying the particles to the other reaction zone (12).

8. A method as claimed in any one of the previous claims, wherein a length of the horizontal portion of the non-mechanical valve(s) Lh is selected between 1 and 20 times the diameter of the horizontal line portion Dh, preferably between 3 and 7 times Dh.

9. A method as claimed in any one of the previous claims, wherein the diameter of the vertical line portion Dv is selected greater than or equal to the diameter of the horizontal line portion Dh of the non-mechanical valve(s).

10. A method as claimed in claim 9, wherein the diameter of the vertical line portion Dv and the diameter of the horizontal line portion Dh of the non-mechanical valve(s) are selected substantially identical.

11. A method as claimed in any one of the previous claims, wherein the control gas injection point upstream from the elbow is positioned at a distance x (difference between the height of the injection point in the vertical part and the lowest point of the non-mechanical valve) of the order of 1 to 5 times the diameter of the vertical line portion Dv.

12. A chemical looping combustion method as claimed in any one of the previous claims, wherein the solid active mass particles belong to group B of Geldart's classification.

13. A chemical looping combustion method as claimed in any one of the previous claims, wherein the solid active mass particles are metal oxides.

14. Use of the method as claimed in any one of the previous claims for hydrogen production.

15. Use of the method as claimed in any one of claims 1 to 13 for synthesis gas production.

16. Use of the method as claimed in any one of claims 1 to 13 for heat production.
